# EUROPÄISCHE PATENTSCHRIFT

(11) **EP 2 190 922 B1**
(45) Veröffentlichungstag und Bekanntmachung des Hinweises auf die Patenterteilung: **22.06.2011**
(21) Anmeldenummer: 08803606.6
(22) Anmeldetag: 03.09.2008
(51) Int. Cl.: C08L 25/10, C08L 53/02

(54) **TRANSPARENTE UND ZÄHSTEIFE FORMMASSEN AUF BASIS VON STYROL-BUTADIEN-BLOCKCOPOLYMERMISCHUNGEN**
TRANSPARENT, TOUGH AND RIGID MOLDING COMPOSITIONS BASED ON STYRENE-BUTADIENE BLOCK COPOLYMER MIXTURES
MATIÈRES À MOULER TRANSPARENTES ET RIGIDES À BASE DE MÉLANGES DE COPOLYMÈRES SÉQUENCÉS STYROL-BUTADIÈNE

(30) Priorität: 14.09.2007 EP 07116456
(43) Veröffentlichungstag der Anmeldung: 02.06.2010
(73) Patentinhaber: BASF SE, 67056 Ludwigshafen (DE)
(72) Erfinder: KNOLL, Konrad, 68199 Mannheim (DE); KOCH, Jürgen, 67141 Neuhofen (DE); CHAROENSIRISOMBOON, Piyada, 68165 Mannheim (DE); WAGNER, Daniel, 67098 Bad Dürkheim (DE)
(86) Internationale Anmeldenummer: PCT/EP2008/061635
(87) Internationale Veröffentlichungsnummer: WO 2009/037115

(56) Entgegenhaltungen:
- EP-A- 0 698 639
- DE-A-102005 001 637
- DE-A1- 19 810 141
- US-A- 4 304 881
- US-A1- 2002 107 323

## Beschreibung

Die Erfindung betrifft eine Mischung, die
a) 95 bis 30 Gew.-% eines Copolymeren oder Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C,
b) 5 bis 45 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glastemperatur Tg_{B} im Bereich von -70° bis 0°C,
c) 0 bis 40 Gew.-% Polystyrol C und
d) 0 bis 30 Gew.-% eines Blockcopolymeren D, welches mindestens einen Copolymerblock (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C, und mindestens einen Dienblock B oder einen Copolymerblock (B/S)_{B} aus jeweils 1 bis 60 Gew.-% vinylaromatischen Monomeren und 99 bis 40 Gew.-% Dienen und einer Glastemperatur Tg_{B} im Bereich von -100° bis 0°C,
d) 0 bis 6 Gew.-% eines Plastifizierungsmittels
enthält, sowie deren Verwendung zur Herstellung von Verpackungen für Elektronikkomponenten.

Die US 3,639,517 beschreibt sternförmig verzweigte Styrol-Butadien-Blockcopolymere mit 75 bis 95 Gewichtsprozent endständigen Blöcken aus vinylaromatischen Monomeren und 5 bis 30 Gewichtsprozent elastomeren, überwiegend aus konjugierten Dieneinheiten bestehender Blöcke. Sie können mit Standardpolystyrol zu hochtransparente Mischungen abgemischt werden. Mit zunehmendem Anteil Polystyrol erhöht sich der E-Modul auf Kosten der Zähigkeit. Mischungen mit etwa 40 Gewichtsprozent Polystyrol sind für die meisten Anwendungen schon zu spröde. Man kann meist nur 20 bis maximal 30 Gewichtsprozent Polystyrol bei noch akzeptabler Duktilität zumischen. Sternförmige Blockcopolymere mit 40 Gew.-% Hartblöcken aus vinylaromatischen Monomeren und Weichblöcken mit statistischem Aufbau aus vinylaromatischen Monomeren und Dienen sind in WO 00/58380 beschrieben. Zur Erhöhung der Steifigkeit werden sie mit Standardpolystyrol abgemischt, wobei die Transparenz abnimmt .Sie ergeben selbst mit 60 Gewichtsprozent Polystyrol noch duktile Mischungen. Der Nachteil dieser Abmischungen ist die deutlich sichtbare Trübung, die für anspruchsvollere Anwendungen und dickere Teile unakzeptabel ist.

Die WO 2006/074819 beschreibt Mischungen von 5 bis 50 Gew.-% eines Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält, und 95 bis 50 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glastemperatur Tg_{B} im Bereich von -70° bis 0°C enthält, zur Herstellung von Schrumpffolien. Die Mischungen haben eine Steifigkeit im Bereich von 700 bis maximal 1300 MPa.

Durch Abmischen von herkömmlichen Styrol-Butadien-Blockcopolymeren, beispielsweise Styrolux® mit Polystyrol kann je nach Mischungsverhältnis ein beliebiger Elastizitätsmodul von bis zu über 3000 MPa eingestellt werden. Erfahrungsgemäß bricht die Duktilität bei einem Elastizitätsmodul von über 1900 MPa jedoch völlig ein. Die Mischungen weisen dann ein ähnliches mechanisches Verhalten wie Polystyrol selbst auf und bieten gegenüber diesem keine Vorteile mehr.

Für Verpackungsmaterialien für elektronische Bauteile, wie Transportröhren für Integrierte Schaltkreise, ist eine Kombination von hoher Steifigkeit und Duktilität in Verbindung mit sicherem Überschreiten der Streckspannung und guter Transparenz erforderlich. Für diese Anwendungen waren bisher Polystyrol und dessen Mischungen mit Styrol-Butadien-Blockcopolymeren nicht geeignet. Der Markt wurde bisher von Polyvinylchlorid (PVC) oder sehr teuren Spezialpolymeren abgedeckt.

Aufgabe der Erfindung war es, zäh-steife Mischungen von Styrol-Butadien-Blockcopolymeren zu finden, die gleichzeitig eine hohe Transparenz aufweisen. Die Mischungen sollten zur Formmassen mit hoher Steifigkeit verarbeitbar sein und insbesondere einen Elastizitätsmodul (E-Modul) von mehr als 1500 bis 2500 MPa in Kombination mit einer gewissen Duktilität im Zugversuch aufweisen.

Demgemäß wurde die oben genannte Mischung gefunden.

Schon geringe Anteile des Blockcopolymeren B steigern die Duktilität von Mischungen aus Blockcopolymer A und Polystryrol deutlich, ohne dass die Transparenz signifikant abfällt. Der Anteil an Polystyrol in der Mischung, bei dem noch eine gewisse Duktilität beobachtet wird, hängt vom Verhältnis BlockcopolymerA/Blockcopolymer B ab. Je kleiner dieses Verhältnis ist, desto mehr Polystyrol kann zugemischt werden. Bevorzugt sind Mischungsverhältnisse von BlockcopolymerA/Blockcopolymer B im Bereich von 90/10 bis 70/30, besonders bevorzugt um etwa 80/20. Bei einem Verhältnis BlockcopolymerA/Blockcopolymer B von 80/20 enthält die Mischung bevorzugt 35 bis40 Gewichtsprozent Polystyrol.

Bevorzugt enthält die Mischung 60 bis 80 Gew.-% des Copolymeren oder Blockcopolymeren A, 20 bis 40 Gew.-% des Blockcopolymeren B und 0 bis 20 Gew.-% Polystyrol C. Neben den Blockcopolymeren A und B und Polystyrol C kann die Mischung noch geringere Mengen an weiteren thermoplastischen Polymeren und 1 bis 6 Gew.-% üblicher Hilfsstoffe, wie Plastifizierungsmittel E enthalten.

Innerhalb der erfindungsgemäßen Zusammensetzung der Blockcopolymer-Mischungen können verschiedene Morphologien ausgebildet werden. Besonders transparente, zäh-steife Formmassen weisen drei verschiedenen Domänen, wobei zwei Domänen die Hartphase und eine Domäne als Weichphase bilden.Teilweise wird eine Waben-Morphologie beobachtet, die aus drei Phasen besteht. Zwei diskontinuierliche Phasen werden durch die unverträglichen Co- oder Blockcopolymeren A und Polystyrol C gebildet. Diese beiden Hartphasen werden durch eine Weichphase, die durch das Blockcopolymere B gebildet wird, getrennt. Die Weichphase B lagert sich in die Phasengrenze zwischen den unverträglichen Hartphasen des Blockcopolymeren B und Polystyrol C ein.

Bei Anteilen von bis zu 30 Gew.-% Polystyrol C können Teilchenmorphologien mit an den Brechungsindex der Matrix angepassten Teilchen gebildet werden. Hierbei besitzt die aus dem Blockcopolymeren A gebildete Matrix und die aus den Blockcopolymeren B und Polystyrol C gebildeten Kautschukteilchen den gleichen Brechungsindex. Mischungen mit dieser Morphologie verhalten sich wie Schlagzähpolystyrol, sind aber transparent (Clear HIPS). Die Zumischung der Block-Copolymeren D kann diese Morphologieausbildung begünstigten.

Die Dreiphasigkeit ergibt sich beim Mischen der Copolymeren oder Blockcopolymeren A mit den Blockcopolymern B und Polystyrol C und kann durch Elektronenmikroskopie an Proben der extrudierten Mischung erkannt werden. Überraschenderweise wurde gefunden, dass bei Dreiphasigkeit, wobei zwei in- oder teilkompatible Hartphasen vorliegen, der Gesamthartphasenanteil soweit gesteigert werden kann, bis der gewünschte E-Modul-Bereich von über 1900 MPa erreicht wird, ohne dass die Duktilität verschwindet.

### Copolymer oder Blockcopolymer A:

Die Mischung enthält 30 bis 95 Gew.-% eines Copolymeren oder Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält

Die Glasübergangstemperatur des Copolymerblocks (B/S)_{A} liegt bevorzugt im Bereich von 50 bis 70°C. Die Glasübergangstemperatur wird durch die Comonomerzusammensetzung beeinflusst und kann durch Differential Scanning Calorimetrie (DSC) oder Differential Thermal Analysis (DTA) bestimmt oder gemäß der Fox-Gleichung berechnet werden. Bevorzugt besteht der Copolymerblock (B/S)_{A} aus 80 bis 90 Gew.-% Styrol und 10 bis 20 Gew.-% Butadien.

Bevorzugt werden Copolymeren oder Blockcopolymere A, welche ein oder mehrere Copolymerblöcke (B/S)_{A} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Besonders bevorzugt besteht das Copolymeren oder Blockcopolymer A aus einem einzigen Copolymerblock (B/S)_{A} oder weist lineare Strukturen, wie S-(B/S)_{A} oder S-(B/S)_{A}-S auf, wobei S jeweils für einen Hartblock aus vinylaromatischen Monomeren steht. Ebenfalls bevorzugt sind Sternpolymere [(B/S)_{A}]Xₙ mit n Sternästen, die durch Kopplung mit einem n-funktionellen Kopplungsmittel oder durch Initiierung mit einem n-funktionellen Initiator zugänglich sind. Als Kopplungsmittel geeignet ist z.B. epoxidiertes Pflanzenöl wieepoxidiertes Leinsamen- oder Sojabohnenöl. Man erhält in diesem Fall Sterne mit 3 bis 5 Ästen. Ebenfalls bevorzugt sind Sternblockcopolymere [S-(B/S)_{A}]Xₙ.

Statistische Copolymere (B/S)_{A} können aber auch durch radikalische Polymerisation hergestellt werden

Die gewichtsmittlere Molmasse M_{w} des Copolymerblocks (B/S)_{A} liegt in der Regel im Bereich von 50.000 bis 400.000 g/mol, bevorzugt im Bereich von 60.000 bis 200.000 g/mol, besonders bevorzugt im Bereich von 100.000 bis 150.000 g/mol. Für die Strukturen, wie S-(B/S)_{A} oder S-(B/S)_{A}-S liegt das gewichtsmittlere Molekulargewicht M_{w} für jeden Block S bevorzugt im Bereich von 15.000 bis 45.000 g/mol liegt. Bevorzugt bestehen die Blöcke S aus Styroleinheiten. Bei den anionisch hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird M_{w} über die Polymerisationstemperatur und/oder den Zusatz von Reglern eingestellt.

Die Copolymeren oder Blockcopolymeren A sind in der Regel mit Standardpolystyrol nicht verträglich.

### Blockcopolymer B

Als Blockcopolymer B enthält die erfindungsgemäße Mischung 5 bis 45 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glasübergangstemperatur Tg_{B} im Bereich von -70° bis 0°C, bevorzugt im Bereich von - 65°C bis -20°C, enthält.

Als Blockcopolymere B eignen sich insbesondere steife Blockcopolymere, welche aus 60 bis 90 Gew.-% vinylaromatischen Monomeren und 10 bis 40 Gew.-% Dien, bezogen auf das gesamte Blockcopolymer, bestehen und aus überwiegend vinylaromatischen Monomeren, insbesondere Styrol enthaltenden Hartblöcken S und Diene, wie Butadien und Isopren enthaltenden Weichblöcken B oder B/S aufgebaut sind. Besonders bevorzugt sind Blockcopolymere mit 70-80 Gew.-% Styrol und 20-30 Gew.-% Dien.

Die Copolymerblöcke (B/S)_{B} des Blockcopolymeren B weisen bevorzugt eine statistischer Verteilung der vinylaromatischen Monomeren und Dienen auf.

Bevorzugte Blockcopolymere B weisen eine sternförmige Struktur mit mindestens zwei endständigen Hartblöcke S₁ und S₂ mit unterschiedlichem Molekulargewicht aus vinylaromatischen Monomeren auf, wobei der Anteil der Summe der Hartblöcke S mindestens 40 Gew.-%, bezogen auf das gesamte Blockcopolymer B beträgt. Möglich sind auch lineare Strukturen, wie (B/S)_{B}-S₂ oder S₁-(B/S)_{B}-S₂. Bevorzugt weisen die entständigen Blöcke S₁ eine zahlenmittlere Molmasse Mₙ im Bereich von 5.000 bis 30.000 g/mol und S₂ eine zahlenmittleren Molmasse Mₙ im Bereich von 35.000 bis 150.000 g/mol auf.

Bevorzugt sind polymodale Styrol-Butadien-Blockcopolymere mit endständigen Styrolblöcken, wie sie beispielsweise in DE-A 25 50 227 oder EP-A 0 654 488 beschrieben sind.

Besonders bevorzugt werden Blockcopolymere B mit mindestens zwei Hartblöcke S₁ und S₂ aus vinylaromatischen Monomeren und mindestens einem dazwischenliegenden, statistischen Weichblock (B/S)_{B} aus vinylaromatischen Monomeren und Dienen, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Die Blockcopolymeren B sind im Handel beispielsweise unter den Handelsbezeichnungen Styrolux® 3G 33/Styroclear® GH 62, K-Resin® 03, K-Resin® 01, Kraton® D 1401 P bzw. Styrolux® 3G 55, Styrolux® BX 6205, Styrolux BX® 6415, K-Resin® XK40 erhältlich.

### Polystyrol C

Als Polystyrol können alle Standard (GPPS) oder Schlagzäh (HIPS)-Polystyrol eingesetzt werden. In der Regel werden 0 bis 40 Gew.-% hermolekulare Polystyrole mit einem mittleren Molekulargewicht M_{w} im Bereich von 220.000 bis 500.000 g/mol eingesetzt.

### Blockcopolymer D

Des Weiteren kann die erfindungsgemäße Mischung 0 bis 30 Gew.-% eines Blockcopolymeren D, welches mindestens einen Dienblock B oder einen Copolymerblock (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C, und mindestens einen Copolymerblock (B/S)_{B} aus jeweils 1 bis 60 Gew.-%, bevorzugt 20 bis 60 Gew.-% vinylaromatischen Monomeren und 99 bis 40 Gew.-%, bevorzugt 80 bis 40 Gew.-% Dienen und einer Glastemperatur Tg_{B} im Bereich von -100° bis 0°C, bevorzugt -70 bis 0°C enthalten.

Die Copolymerblöcke (B/S)_{A} und (B/S)_{B} entsprechen in ihrer Zusammensetzung und Eigenschaften bevorzugt den entsprechenden für die Blockcopolymeren A und B beschiebenen Blöcken. Der Dienblock B besteht ausschließlich aus Dienmonomereinheiten, insbesondere Butadien und/oder Isopren.

Bevorzugt weisen die Blockcopolymeren D die Strukturen (S/B)_{A}-(S/B)_{B}-S oder (S/B)_{A}-B-S auf.

### Plastifizierungsmittel E

Als Plastifizierungsmittel E können 0 bis 6 Gew.-%, bevorzugt 2 bis 4 Gew.-% eines homogen mischbaren Öls oder Ölgemisches, insbesondere Weißöl oder Dioktyl-Adipat oder deren Mischungen verwendet werden.

Die erfindungsgemäßen Mischungen sind hoch transparent und eignen sich insbesondere zur Herstellung von Verpackungen für Elektronikkomponenten, insbesondere röhrenförmige Verpackungen für Integrierte Schaltkreise (IC).

### Beispiele:

### Copolymeren und Blockcopolymer A

Zur Herstellung eines linearen Styrol-Butadien-Blockcopolymeren A1 der Struktur B/S wurden 2991 ml Cyclohexan vorgelegt, bei 60°C mit 1,6 ml sec-Butyllithium (BuLi) austitriert und anschließend mit 5,19 ml einer 1,4 M sec.-Butyl-Lithium-Lösung zur Initiierung und 0,74 ml einer 0,329 M Kalium-tert.-Amylat (KTA)-Lösung als Randomizer versetzt und auf 59°C abgekühlt. Anschließend wurden 1440 g Styrol- und 160 g Butadien gleichzeitig in mehreren Portionen zugegeben und die Maximaltemperatur durch Gegenkühlen auf 77°C begrenzt. Danach wurden die lebenden Polymerketten durch Zugabe von 0,83 ml Isopropanol terminiert, mit 1,0% CO₂/0,5% Wasser, bezogen auf Feststoff angesäuert und eine Stabilisatorlösung (0,2% Sumilizer GS und 0,2% Irganox 1010, jeweils bezogen auf Feststoff) zugegeben. Das Cyclohexan wurde im Vakuumtrockenschrank eingedampft.

Das Copolymer mit der Struktur (S/B) mit der Molmasse 220.000 g/mol wies im DSC eine Glasübergangstemperatur von 67°C auf.

Das Blockcopolymer A2 wurde analog A1 hergestellt und mit 5 Gew.-% Weißöl (medizinisches Weißöl mit einer Viskosität von 70 Centi-stokes bei 40°C) versetzt.

### Blockcopolymer B:

Ein sternförmiges Blockcopolymer B1 (26 Gew.-% Butadien, 74 Gew.-% Styrol) mit statistischen Copolymerblöcken B/S wurde durch sequentielle anionische Polymerisation von Styrol und Butadien und anschließende Kopplung mit expoxidiertem Leinöl entsprechend Beispiel 17 aus WO 00/58380 hergestellt.

### Komponente C

Als Komponente C1 wurde Standardpolystyrol PS 158 K mit einem M_{w} von 270.000 g/mol und einem Mₙ von 103.000 g/mol der BASF Aktiengesellschaft eingesetzt.

Als Komponente C2 wurde Standadrpolystyrol PS 165 H mit einem M_{w} von 300.000 g/mol und einem Weisölanteill (medizinisches Weißöl mit einer Viskosität von 70 Centi-stokes bei 40°C) von 3,5 Gew.-% eingesetzt

### Komponente D

Als Komponente D1 wurde ein lineares Blockcopolymer der Struktur (S/B)_{A}-(S/B)_{B}-S mit dem Blockanteilen (25-50-25) eingesetzt.

Als Komponente D2 wurde ein lineares Blockcopolymer der Struktur (S/B)_{A}-B-S mit dem Blockanteilen (30-40-30) eingesetzt.

Als Komponente D3 wurde ein lineares Blockcopolymer der Struktur (S/B)_{A}-(S/B)_{B}-S mit dem Blockanteilen (33-34-33) und einem Gesamtmolekulargewicht von 210.000 g/mol eingesetzt. Das Verhältnis S/B betrug im Block A 90/10 und im Block B 20/ 80. Die DSC-Kurve zeigte jeweils eine Glasübergangstemperatur bei -84°C und + 82°C.

### Mischungen M 1 bis M 19

Die Blockcopolymermischungen wurden jeweils durch Aufschmelzen der in Tabelle 5 angegebenen Gewichtsteile der Blockcopolymeren A1, A2, B1 sowie der Komponenten C (Polystyrol PS 158 K) und D im Extruder hergestellt und anschließend zu Rohren extrudiert oder zu Platten oder Folien gepresst.

Die mechanischen Werte wie E-Modul, Spannung und Dehnung wurden nach ISO 527 bestimmt.

Die Transmissionsmessungen erfolgten im Bereich von 400 - 700 nm. Die Trübung der Proben wurde mit einer Notenskala von 1 (sehr gut) bis 5 (sehr schlecht) bewertet.

Die Biegekraft wurde mit einem Biegetest an einer Röhre bei 5 cm Auslenkung im Abstand von 1 m ermittelt.

Die Zähigkeit wurde im Knicktest durch Biegen einer Röhre über eine Kante (45 und 90°) wie folgt bewertet: 1 = keine Rissbildung, 2 = Rissbildung aber kein Bruch, 3 = Bruch bei 90°, 4 = spröde, früher Bruch.

### Beispiele M1 bis M4

Mischungen aus dem Copolymeren A1 (statistisches Styrol-Butadien-Copolymer aus 10 Gew.-% Butadien und 90 Gew.-% Styrol und einer Glasübergangsstemperatur T_{g} von 70°C) und Blockcopolymeren B1 (Styrol-Butadien-Blockcopolymer mit 26 Gew.-% Butadien und 74 Gew.-% Styrol) wurden auf einem 16 mm-Zweischneckenextruder bei 200 bis 230°C gemischt und über eine Breitschlitzdüse zu einer 1 mm dicken Folie verarbeitet. Die Mischungsverhältnisse und mechanischen bzw. optischen Eigenschaften der Folien sind in Tabelle 1 zusammengestellt. Sie zeigen eine sehr hohe Transparenz. Tabelle 1:

| | Beispiel | M1 | M2 | M3 | M4 |
|---|---|---|---|---|---|
| Zusammensetzung | | | | | |
| | A1 [Gew.-%] B1 | 65 | 70 | 75 | 80 |
| | [Gew.-%] | 35 | 30 | 25 | 20 |

| Mechanische Eigenschaften parallel | | | | | |
|---|---|---|---|---|---|
| | E-Modul [N/mm²] | 1430 | 1520 | 1740 | 1930 |
| | Bruchspannung [N/mm²] | 22 | 25 | 25 | 25 |
| | Bruchdehnung [%] | 15,5 | 20,4 | 20,5 | 4,4 |

| Mechanische Eigenschaften senkrecht | | | | | |
|---|---|---|---|---|---|
| | E-Modul [N/mm²] | 1390 | 1650 | 1840 | 2090 |
| | Bruchspannung [N/mm²] | 23 | 25 | 27 | 30 |
| | Bruchdehnung [%] | 16,1 | 3,7 | 3,4 | 2,4 |

| Optische Eigenschaften | | | | | |
|---|---|---|---|---|---|
| | Transparenz [%] | 76 | 79 | 79 | 80 |
| | Trübung [%] | 12,8 | 10,4 | 10,5 | 80,1 |
| | Yellowness Index YI [%] | 14,5 | 13,0 | 13,4 | 10,2 |

Beispiele M 7 bis M 17 und Vergleichsversuch V 1, M5 und M 6:

Die Komponenten A1, A2, B1, C1 und C2 wurden entprechend den in Tabelle 2 angebenen Gewichtsanteilen gemischt und zu Profilrohren extrudiert. Die Eigenschaften sind in Tabelle 3 zusammengestellt. Tabelle 4 zeigt die mechanischen und optischen Eigenschaften ausgewählter Mischungen an 1 mm dicken, extrudierten Filmen. Die Mischungen M 7 und M 8 zeigen eine reguläre Partikelstruktur. Die Brechungsindizes der Partikel und der Matrix sind angeglichen. Sie verhalten sich daher wie transparentes Schlagzähpolystyrol

**Tabelle 2**

| | A1 | A2 | B1 | C1 | C2 | Biegekraft [g] | Zähigkeit (Knicktest) | Trübung |
|---|---|---|---|---|---|---|---|---|
| M5 | 24 | | 40 | 36 | | 606 | 1 | 4 |
| M6 | 24 | | 40 | | 36 | 593 | 2 | 5 |
| M7 | 70 | | 15 | | 15 | 707 | 4 | 2-3 |
| M8 | 60 | | 20 | | 20 | 660 | 4 | 3 |
| M9 | 50 | | 25 | | 25 | 673 | 4 | 4 |
| M 10 | 55 | | 20 | | 25 | 698 | 4 | 4 |
| M11 | 50 | | 20 | | 30 | 696 | 4 | 4 |
| M 12 | 45 | | 25 | | 30 | 675 | 4 | 4-5 |
| M 13 | 40 | | 30 | | 30 | 650 | 2 | 5 |
| M 14 | | 24 | 40 | 36 | | 620 | 3 | 3-4 |
| M 15 | | 24 | 40 | | 36 | 607 | 3 | 4 |
| M 16 | | 60 | 20 | | 20 | 695 | 4 | 2 |
| M 17 | | 50 | 20 | | 30 | 705 | 4 | 2 |
| V1 | 20 | | 50 | | 30 | 494 | 1 | 4 |

**Tabelle 3:**

| | M11 | M12 | M13 |
|---|---|---|---|
| E-Modul [MPa] längs | 2476 | 2283 | 2178 |
| E-Modul [MPa] quer | 2167 | 1846 | 1572 |
| Reißdehnung [%] längs | 28,8 | 8,1 | 24,9 |
| Reißdehnung [%] quer | 9.1 | 16,7 | 16,1 |
| Transparenz [%] | 82,3 | 79,4 | 77,3 |
| Trübung [%] | 8,6 | 9,7 | 11,4 |

### Beispiele M 18 und M 21

Die Komponenten A1, B1,C1 und D1, D2 bzw. D3 wurden entsprechend den in Tabelle 4 angegebenen Gewichtsanteilen gemischt und bei 160°C zu 4 mm dicken Platten verpresst. Die Eigenschaften sind in Tabelle 4 zusammengestellt.

**Tabelle 4**

| | A1 | B1 | C1 | D | E-Modul [MPa] | Reißdehung [%] | Transparenz [%] |
|---|---|---|---|---|---|---|---|
| M 18 | 40 | 5 | 40 | 5 D1/10 D2 | 2130 | 50 | 50,4 |
| M 19 | 30 | 30 | 30 | 10 D3 | 1951 | 20,4 | 75,8 |
| M 20 | 35 | 20 | 35 | 10 D3 | 2043 | 39,3 | 69,2 |
| M 21 | 40 | 10 | 40 | 10 D3 | 2495 | 9,2 | 66,7 |

## Patentansprüche

1. Mischung enthaltend
a) 95 bis 30 Gew.-% eines Copolymeren oder Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält,
b) 5 bis 45 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glastemperatur Tg_{B} im Bereich von -70° bis 0°C enthält,
c) 0 bis 40 Gew.% Polystyrol C und
d) 0 bis 30 Gew.-% eines Blockcopolymeren D, welches mindestens einen Copolymerblock (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C, und mindestens einen Dienblock B oder Copolymerblock (B/S)_{B} aus jeweils 1 bis 60 Gew.-% vinylaromatischen Monomeren und 99 bis 40 Gew.-% Dienen und einer Glastemperatur Tg_{B} im Bereich von -100° bis 0°C,
d) 0 bis 6 Gew.-% eines Plastifizierungsmittels E.

2. Mischung nach einem der Ansprüche 1 oder 2, **dadurch gekennzeichnet, dass** der Copolymerblock (B/S)_{A} des Copolymeren oder Blockcopolymeren A eine zahlenmittlere Molmasse Mₙ im Bereich von 50.000 bis 150.000 g/mol aufweist.

3. Mischung nach einem der Ansprüche 1 bis 3, **dadurch gekennzeichnet, dass** der Copolymerblock (B/S)_{A} des Copolymeren oder Blockcopolymeren A eine Glasübergangstemperatur im Bereich von 60° bis 80°C aufweist.

4. Mischung nach einem der Ansprüche 1 bis 4, **dadurch gekennzeichnet, dass** das Copolymeren oder Blockcopolymere A aus einem Copolymerblock (B/S)_{A} besteht.

5. Mischung nach einem der Ansprüche 1 bis 4, **dadurch gekennzeichnet, dass** das Blockcopolymere A die Struktur S-(B/S)_{A}-S aufweist, wobei S für einen Hartblock aus vinylaromatischen Monomeren steht.

6. Mischung nach einem der Ansprüche 1 bis 6, **dadurch gekennzeichnet, dass** die Copolymerblöcke (B/S)_{A} und (B/S)_{B} der Blockcopolymeren A und B eine statistischer Verteilung der vinylaromatischen Monomeren und Dienen aufweisen.

7. Mischung nach einem der Ansprüche 1 bis 7, **dadurch gekennzeichnet, dass** das Blockcopolymere B eine sternförmige Struktur mit mindestens zwei endständigen Hartblöcken S₁ und S₂ mit unterschiedlichem Molekulargewicht aus vinylaromatischen Monomeren aufweist und der Anteil der Summe der Hartblöcke S mindestens 40 Gew.-%, bezogen auf das gesamte sternförmige Blockcopolymer B, beträgt.

8. Mischung nach Anspruch 8, **dadurch gekennzeichnet, dass** das sternförmige Blockcopolymere B endständige Blöcke S₁ mit einer zahlenmittleren Molmasse Mₙ im Bereich von 5.000 bis 30.000 g/mol und S₂ mit einer zahlenmittleren Molmasse Mₙ im Bereich von 35.000 bis 150.000 g/mol aufweist.

9. Mischungen nach einem der Ansprüche 1 bis 9, **dadurch gekennzeichnet, dass** die extrudierte Mischung eine dreiphasige Honigwabenstruktur aufweist.

10. Verwendung der Mischung nach einem der Ansprüche 1 bis 10 zur Herstellung von Verpackungen für Elektronikkomponenten.

11. Röhrenfömige Verpackung für Integrierte Schaltkreise, hergestellt aus einer Mischung nach einem der Ansprüche 1 bis 10.

## Claims

1. A mixture comprising
a) from 95 to 30% by weight of a copolymer or block copolymer A which comprises one or more copolymer blocks (B/S)_{A} each composed of from 65 to 95% by weight of vinylaromatic monomers and of from 35 to 5% by weight of dienes and of a glass transition temperature Tg_{A} in the range from 40° to 90°C,
b) from 5 to 45% by weight of a block copolymer B which comprises at least one hard block S composed of vinylaromatic monomers and comprises one or more copolymer blocks (B/S)_{B} each composed of from 20 to 60% by weight of vinylaromatic monomers and of from 80 to 40% by weight of dienes and of a glass transition temperature Tg_{B} in the range from -70° to 0°C,
c) from 0 to 40% by weight of polystyrene C, and
d) from 0 to 30% by weight of a block copolymer D which comprises at least one copolymer block (B/S)_{A} composed of respectively from 65 to 95% by weight of vinylaromatic monomers and of from 35 to 5% by weight of dienes and of a glass transition temperature Tg_{A} in the range from 40°C to 90°C, and comprises at least one diene block B or copolymer block (B/S)_{B} composed of respectively from 1 to 60% by weight of vinylaromatic monomers and of from 99 to 40% by weight of dienes and of a glass transition temperature Tg_{B} in the range from -100°C to 0°C,
e) from 0 to 6% by weight of a plasticizer E.

2. The mixture according to claim 1, wherein the copolymer block (B/S)_{A} of the copolymer or block copolymer A has a number-average molar mass Mₙ in the range from 50 000 to 150 000 g/mol.

3. The mixture according to either of claims 1 and 2, wherein the copolymer block (B/S)_{A} of the copolymer or block copolymer A has a glass transition temperature in the range from 60° to 80°C.

4. The mixture according to any of claims 1 to 3, wherein the copolymer or block copolymer A is composed of one copolymer block (B/S)_{A}.

5. The mixture according to any of claims 1 to 3, wherein the block copolymer A has the structure S-(B/S)_{A}-S, where S is a hard block composed of vinylaromatic monomers.

6. The mixture according to any of claims 1 to 5, wherein the copolymer blocks (B/S)_{A} and (B/S)_{B} of the block copolymers A and B have random distribution of the vinylaromatic monomers and dienes.

7. The mixture according to any of claims 1 to 6, wherein the block copolymer B has a star-shaped structure having at least two terminal hard blocks S₁ and S₂ with different molecular weight composed of vinylaromatic monomers, and the proportion of the entirety of the hard blocks S is at least 40% by weight, based on the entire star-shaped block copolymer B.

8. The mixture according to claim 7, wherein the star-shaped block copolymer B has terminal blocks S₁ with a number-average molar mass Mₙ in the range from 5000 to 30 000 g/mol and S₂ with a number-average molar mass Mₙ in the range from 35 000 to 150 000 g/mol.

9. The mixture according to any of claims 1 to 8, wherein the extruded mixture has a three-phase honeycomb structure.

10. The use of the mixture according to any of claims 1 to 9 for producing packaging for electronic components.

11. A tubular packaging for integrated circuits, produced from a mixture according to any of claims 1 to 9.

## Revendications

1. Mélange contenant
a) 95 à 30% en poids d'un copolymère ou d'un copolymère à blocs A, qui contient un ou plusieurs blocs copolymères (B/S)_{A} constitués à chaque fois par 65 à 95% en poids de monomères aromatiques de vinyle et 35 à 5% en poids de diènes et qui présente une température de transition vitreuse Tg_{A} dans la plage de 40°C à 90°C,
b) 5 à 45% en poids d'un copolymère à blocs B, qui contient au moins un bloc dur S constitué par des monomères aromatiques de vinyle et un ou plusieurs blocs copolymères (B/S)_{B} constitués à chaque fois par 20 à 60% en poids de monomères aromatiques de vinyle et 80 à 40% en poids de diènes et qui présente une température de transition vitreuse Tg_{B} dans la plage de -70°C à 0°C,
c) 0 à 40% en poids de polystyrène C,
d) 0 à 30% en poids d'un copolymère à blocs D, qui contient au moins un bloc copolymère (B/S)_{A} constitué à chaque fois par 65 à 95% en poids de monomères aromatiques de vinyle et 35 à 5% en poids de diènes et qui présente une température de transition vitreuse Tg_{A} dans la plage de 40°C à 90°C et au moins un bloc diène B ou bloc copolymère (B/S)_{B} constitué à chaque fois par 1 à 60% en poids de monomères aromatiques de vinyle et 99 à 40% en poids de diènes et qui présente une température de transition vitreuse Tg_{B} dans la plage de -100°C à 0°C et
e) 0 à 6% en poids d'un plastifiant E.

2. Mélange selon la revendication 1, **caractérisé en ce que** le bloc copolymère (B/S)_{A} du copolymère ou du copolymère à blocs A présente une masse molaire numérique moyenne Mₙ dans la plage de 50 000 à 150 000 g/mole.

3. Mélange selon l'une quelconque des revendications 1 à 2, **caractérisé en ce que** le bloc copolymère (B/S)_{A} du copolymère ou du copolymère à blocs A présente une température de transition vitreuse dans la plage de 60°C à 80°C.

4. Mélange selon l'une quelconque des revendications 1 à 3, **caractérisé en ce que** le copolymère ou le copolymère à blocs A est constitué par un bloc copolymère (B/S)_{A}.

5. Mélange selon l'une quelconque des revendications 1 à 3, **caractérisé en ce que** le copolymère à blocs A présente la structure S-(B/S)_{A}-S, où S représente un bloc dur en monomères aromatiques de vinyle.

6. Mélange selon l'une quelconque des revendications 1 à 5, **caractérisé en ce que** les blocs copolymères (B/S)_{A} et (B/S)_{B} des copolymères à blocs A et B présentent une répartition statistique des monomères aromatiques de vinyle et des diènes.

7. Mélange selon l'une quelconque des revendications 1 à 6, **caractérisé en ce que** le copolymère à blocs B présente une structure en forme d'étoile comprenant au moins deux blocs durs, S₁ et S₂, en position terminale présentant un poids moléculaire différent en monomères aromatiques de vinyle et la proportion de la somme des blocs durs S est d'au moins 40% en poids, par rapport à la totalité du copolymère à blocs en forme d'étoile B.

8. Mélange selon la revendication 7, **caractérisé en ce que** le copolymère à blocs en forme d'étoile B présente des blocs en position terminale S₁ présentant une masse molaire numérique moyenne Mₙ dans la plage de 5000 à 30 000 g/mole et S₂ présentant une masse molaire numérique moyenne Mₙ dans la plage de 35 000 à 150 000 g/mole.

9. Mélanges selon l'une quelconque des revendications 1 à 8, **caractérisés en ce que** le mélange extrudé présente une structure en nid d'abeilles à trois phases.

10. Utilisation du mélange selon l'une quelconque des revendications 1 à 9 pour la fabrication d'emballages destinés à des composants électroniques.

11. Emballage en forme de tube pour circuits intégrés, fabriqué à partir d'un mélange selon l'une quelconque des revendications 1 à 9.
